# EUROPEAN PATENT SPECIFICATION

(11) **EP 3 454 699 B1**
(45) Date of publication and mention of the grant of the patent: **19.02.2020**
(21) Application number: 17732312.8
(22) Date of filing: 09.05.2017
(51) Int. Cl.: A47J 31/18, A47J 31/06

(54) **A COFFEE MACHINE WITH IMPROVED TRANSFER INTO AN EXTERIOR RECEPTACLE**
KAFFEEMASCHINE MIT VERBESSERTER ÜBERTRAGUNG IN EINEN ÄUSSEREN BEHÄLTER
MACHINE À CAFÉ CARACTÉRISÉE PAR UN TRANSFERT DE CAFÉ AMÉLIORÉ DANS UN RÉCEPTACLE EXTÉRIEUR

(30) Priority: 09.05.2016 TR 201606039
(43) Date of publication of application: 20.03.2019
(73) Proprietor: Arçelik Anonim Sirketi, 34445 Istanbul (TR)
(72) Inventor: KARAAGAC, Emre, 34950 Istanbul (TR); GUNDUZ, Nihat, 34950 Istanbul (TR); CENGIZ, Osman, 34950 Istanbul (TR); KARTAL, Resul, 34950 Istanbul (TR); UGUR ERINC, Gokce, 34950 Istanbul (TR)
(86) International application number: PCT/EP2017/060980
(87) International publication number: WO 2017/194497

(56) References cited:
- EP-A1- 0 862 883
- WO-A1-01/88187
- WO-A1-2009/106175
- US-A1- 2007 261 564

## Description

The present invention relates to a coffee machine that is suitable for use with a capsule that comprises single use coffee.

Use of single-use capsules containing coffee in coffee machines is known. In this type of machines, the capsule is placed to a housing disposed in the upper portion of the body of the machine, and the coffee in the capsule is transferred to a brewing chamber that is disposed in the lower portion of the housing by the capsule being blown/opened. The coffee in the brewing chamber is mixed with water and heated by a heater preferably disposed under the brewing chamber. The brewed coffee can be automatically transferred to a cup or can be transferred by the user to a cup. In the coffee machines wherein the coffee is automatically transferred to a cup, the brewing chamber wherein the coffee is brewed is rotated and the coffee can be transferred to the cup. Use of an extra movement mechanism is required to rotate the brewing chamber. When transfer is made by means of a valve disposed at the bottom of the brewing chamber, foam of the coffee cannot be transferred to the cup. With valves having a complex geometric structure, the foam remains on the valve and drying of the foam on the components of the valve adversely affects the liquid transfer. Also ease of cleaning of the valve is important in terms of the user satisfaction.

In the state of the art International Patent Application No. WO2011007266, a coffee machine using capsules is disclosed.

In the state of the art Turkish Patent Application No. TR200100549, a coffee machine using capsules is disclosed.

Document EP 0 862 883 A1 discloses the features of the preamble of claim 1.

The aim of the present invention is the realization of a coffee machine wherein the coffee is transferred along with its foam to the cup.

The coffee machine realized in order to attain the aim of the present invention, explicated in the claims, comprises a valve having a lower part that is disposed on the brewing chamber wherein the coffee is brewed and that has a channel that is positioned above the pouring port through which the coffee is transferred, and an upper part that is disposed above the lower part, that is loosely connected to the lower part and that can be moved upwards by means of an actuator. The valve opens and closes by triggering of an actuator disposed on the body of the coffee machine. By means of the present invention, first, as the upper part moves upwards and gets separated from the lower part, the channel opens and the foam on the coffee is transferred into the cup through the channel, and then as the upper part moves further upwards and pulls the lower part together therewith, the pouring port opens and the coffee is transferred into the cup through the pouring port. By transferring the coffee by means of the valve which has such a simple geometry, in other words, by transferring the coffee without meandering through narrow pathways, the foam of the coffee is also transferred to the cup.

In an embodiment of the present invention, the lower part and the upper part are connected to each other by means of a chain. By selecting the length of the chain long enough, the upper part is enabled to be move by itself first as the upper part is pulled upwards. When the chain is stretched, the lower part is also enabled to move, thus the pouring port opens.

In another embodiment of the present invention, a guide with a narrowed-down end that extends downwards is provided on the upper surface of the lower part. On the lower surface of the upper part, an arm provided with a claw at the end portion thereof is disposed. When the upper part is seated onto the lower part, the arm engages with the guide. As the upper part moves upwards, the arm moves upwards inside the guide, and when the claw gets caught on the end of the guide, the lower part also starts to move upwards.

In another embodiment of the present invention, a piston that is movably positioned in the upper part is used, wherein the piston passes through the lower part, when the upper part is seated onto the lower part, so as to apply pressure onto the pouring port to close the pouring port. As the piston is pulled upwards, the pouring port and the channel open, and as the upper part starts to move upwards by itself, first the foam is transferred into the cup, and then, with the movement of the lower part, the coffee is transferred into the same.

In the coffee machine of the present invention, according to claim 1, by using a poppet type valve, which is widely used in the state of the art and has a simple structure, transfer of the coffee together with its foam to the cup is provided. Moreover, by means of the components, that constitute the valve, moving separately and together, the coffee is transferred together with its foam into the cup effectively without splashing outside the cup.

The coffee machine realized to attain the aim of the present invention is illustrated in the attached figures, where:

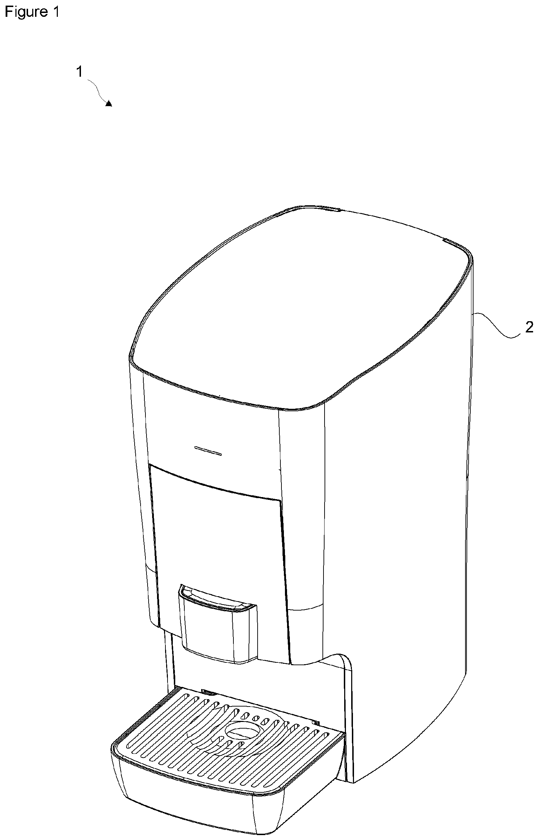

Figure 1 - is the perspective view of a coffee machine.

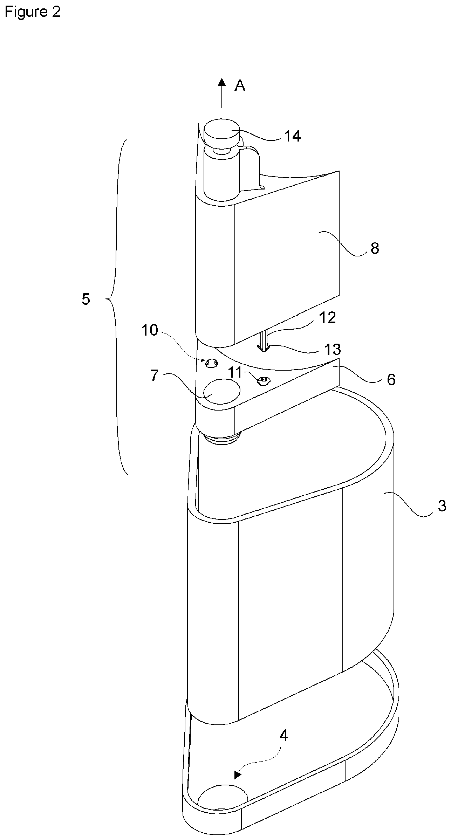

Figure 2 - is the exploded view of a brewing chamber and the valve in an embodiment of the present invention.

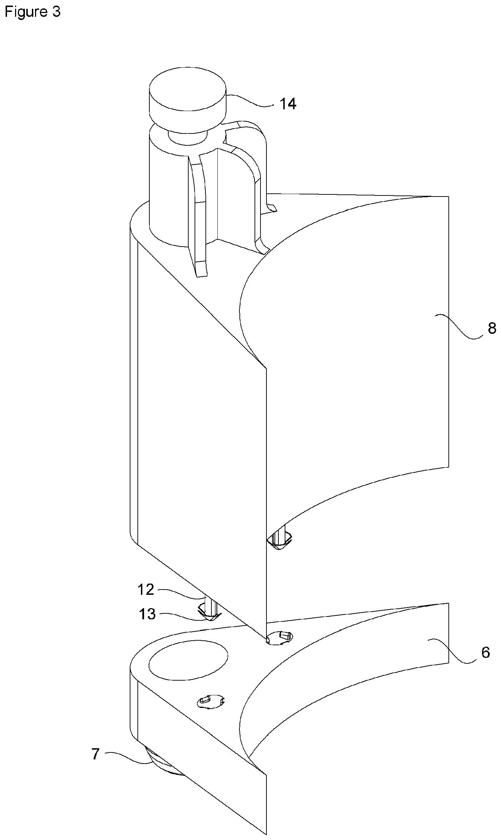

Figure 3 - is the perspective view of the valve in another embodiment of the present invention.

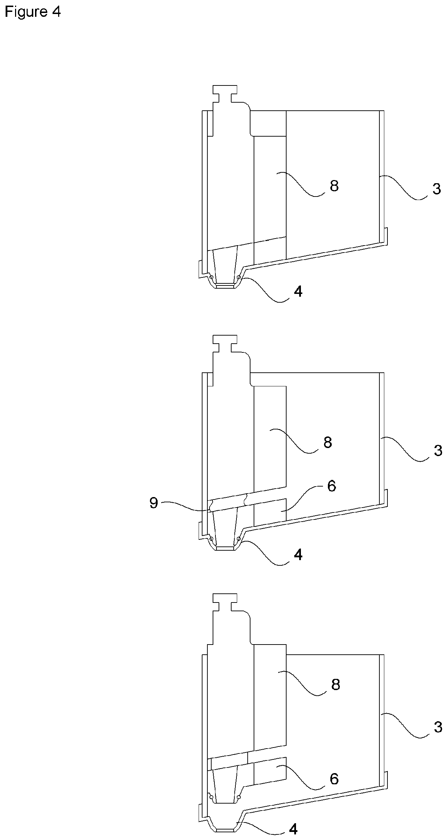

Figure 4 - is the sideways schematic view of the valve shifting from the closed positioned to the open position in another embodiment of the present invention.

The elements and steps in the figures are numbered as follows:
- 1.: Coffee machine
- 2.: Body
- 3.: Brewing chamber
- 4.: Pouring port
- 5.: Valve
- 6.: Lower part
- 7.: Channel
- 8.: Upper part
- 9.: Chain
- 10.: Guide
- 11.: Extension
- 12.: Arm
- 13.: Claw
- 14.: Piston
A. Actuator

The coffee machine (1) comprises a body (2), a brewing chamber (3) that is disposed in the body (2) and wherein the coffee is mixed with water and brewed, and a pouring port (4) disposed at the base of the brewing chamber (3).

In the coffee machine (1), the coffee is transferred to the brewing chamber (3) and then the water is transferred from a water tank (not shown in the figures) disposed within the body (2), and the coffee mixed with water is brewed by being heated by means of a heater (not shown in the figures). With the opening of the pouring port (4), the brewed coffee is transferred to a cup.

The coffee machine (1) of the present invention comprises a valve (5) that is disposed in the brewing chamber (3), that is seated onto the pouring port (4) and that has a lower part (6) having a channel (7) aligned with the pouring port (4) and an upper part (8) positioned above the lower part (6) as connected to the lower part (6) so as to move in the vertical direction, the valve (5) enabling the foam on the coffee to be transferred through the channel (7) by creating a gap between the upper part (8) and the lower part (6) when first the upper part (8) is moved upwards by means of an actuator (A), the valve (5) further enabling the pouring port (4) to be opened and the remaining coffee to be transferred as the lower part (6) also moves upwards when the upper part (8) is further moved upwards. In the coffee machine (1) of the present invention, the valve (5) shifts into the half-open state as the upper part (8) is pulled upwards by means of the actuator (A) disposed on the body (2) and thus the foam of the coffee is enabled to be transferred by passing through the channel (7) between the upper part (8) and the lower part (6), and as the upper part (8) is pulled further upwards, the lower part (6) connected to the upper part (8) is enabled to move upwards, the valve (5) shifts into the open state and the coffee is enabled to be transferred through the pouring port (4). In summary, as the actuator (A) pulls the upper part (8) upwards to an extent, only the upper part (8) moves upwards and as the actuator (A) pulls the upper part (8) further upwards, the upper part (8) and the lower part (6) moves together upwards so as to leave a gap therebetween. As the actuator (A) pushes the upper part (8) downward, the lower part (6) also moves downward and bears against the pouring port (4), thus closing the pouring port (4). By means of the valve (5) having a structure which is similar to its derivative known as the poppet valve in the state of the art, the pouring port (4) can be opened widely and the coffee can be easily transferred into the cup. Thus, the coffee can be transferred together with its foam into the cup and the cleaning of the valve (5) is facilitated.

In an embodiment of the present invention, the valve (5) comprises a chain (9) with one end loosely connected to the upper part (8) and the other end loosely connected to the lower part (6), the chain (9), when stretched, providing that a gap wide enough for the foam to be poured remains between the lower part (6) and the upper part (8). As the chain (9) is loosely connected between the upper part (8) and the lower part (6), when the actuator (A) pulls the upper part (8) upwards, first only the upper part (8) moves, thus enabling the foam of the coffee to be transferred into the cup through the channel (7). As the upper part (8) is further pulled upwards, the chain (9) is stretched, thus enabling the lower part (6) to also move upwards. Thus, the coffee is enabled to be transferred from the pouring port (4).

In another embodiment of the present invention, the valve (5) comprises a guide (10) that is bored on the upper surface of the lower part (6), the upper portion of the guide (10) being narrowed by means of an extension (11) that is flush with the upper surface of the lower part (6), the valve (5) further comprising an arm (12) that is disposed on the lower surface of the upper part (8), that has a claw (13) at the end thereof and that enters the guide (10) as the claw (13) passes over the extension (11). In this embodiment, the upper part (8) and the lower part (6) are connected to each other as the arm (12) engages with the guide (10) and when the upper part (8) is pulled upwards, only the upper part (8) moves until the claw (13) bears against the extension (11), and as the claw (13) bears against the extension (11), the lower part (6) also starts to move upwards. The length of the individual movement of the upper part (8) is as much as the length of the arm (12). As the arm (12) is about to leave the guide (10) and the claw (13) bears against the extension (11), the upper part (8) moves together with the lower part (6).

In another embodiment of the present invention, the valve (5) comprises a piston (14) that is disposed on the upper part (8) and that passes through the channel (7) while moving downwards, thus enabling the pouring port (4) to be closed. Movable in the upper part (8), the piston (14) moves below the lower surface of the upper part (8) so as to enter the channel (7) arranged on the lower part (6), and bears against the pouring port (4), thus closing the pouring port (4). The piston (14) is preferably connected to the actuator (A), and when the piston (14) is pulled upwards by means of the actuator (A), the pouring port (4) opens and as the protrusions (not shown in the figures) on the piston (14) get caught on the upper part (8), the piston (14) starts to move together with the upper part (8). As the upper part (8) moves upwards and a gap is created between the same and the lower part (6), the foam of the coffee passes over the lower part (6) to be poured through the channel (7).

In different embodiments of the present invention, the height of the lower part (6) can be adjusted according to the amount of coffee to be brewed in the brewing chamber (3). For example, if coffee for two cups is brewed in the brewing chamber (3), the lower part (6) is adjusted to be high enough to hold coffee for two cups, and when the upper part (8) moves upwards and the channel (7) opens, only the foam is enabled to be transferred into the cup.

In the coffee machine (1) of the present invention, as two of the components of the valve (5), that is the lower part (6) and the upper part (8) first move separately, then together, the coffee is transferred into the cup together with its foam.

## Claims

1. A coffee machine (1) **comprising** a body (2), a brewing chamber (3) that is disposed in the body (2) and wherein the coffee is mixed with water and brewed, and a pouring port (4) disposed at the base of the brewing chamber (3); **characterized by** a valve (5) that is disposed in the brewing chamber (3), that is seated onto the pouring port (4) and that has a lower part (6) having a channel (7) aligned with the pouring port (4) and an upper part (8) positioned above the lower part (6) and connected to the lower part (6) so as to move in the vertical direction, the valve (5) enabling the foam on the coffee to be transferred through the channel (7) by creating a gap between the upper part (8) and the lower part (6) when first the upper part (8) is moved upwards by means of an actuator (A), the valve (5) further enabling the pouring port (4) to be opened and the remaining coffee to be transferred as the lower part (6) also moves upwards when the upper part (8) is further moved upwards.

2. A coffee machine (1) as in Claim 1, **characterized by** the valve (5) comprising a chain (9) with one end loosely connected to the upper part (8) and the other end loosely connected to the lower part (6), the chain (9), when stretched, providing that a gap wide enough for the foam to be poured remains between the lower part (6) and the upper part (8).

3. A coffee machine (1) as in Claim 1 or 2, **characterized by** the valve (5) comprising a guide (10) that is bored on the upper surface of the lower part (6), the upper portion of the guide (10) being narrowed by means of an extension (11) that is flush with the upper surface of the lower part (6), the valve (5) further comprising an arm (12) that is disposed on the lower surface of the upper part (8), that has a claw (13) at the end thereof and that enters the guide (10) as the claw (13) passes over the extension (11).

4. A coffee machine (1) as in any one of the above claims, **characterized by** the valve (5) comprising a piston (14) that is disposed on the upper part (8) and that passes through the channel (7) while moving downwards, thus enabling the pouring port (4) to be closed.

## Patentansprüche

1. Eine Kaffeemaschine (1) umfasst einen Körper (2), eine Brühkammer (3), die in dem Körper angeordnet ist und in der der Kaffee mit Wasser gemischt und gebrüht wird und eine Einfüllöffnung (4) die am Boden der Brühkammer (3) angeordnet ist; gekennzeichnet ist sie durch ein in der Brühkammer (3) angeordnetes Ventil (5), das auf der Einfüllöffnung (4) sitzt und einen unteren Teil (6) mit einem Kanal (7) aufweist, der mit der Einfüllöffnung (4) ausgerichtet ist und einen oberen Teil (8) aufweist, der über dem unteren Teil (6) positioniert und verbunden zum unteren Teil (6) ist, um sich in vertikaler Richtung zu bewegen, das Ventil (5) ermöglicht es, dass der Schaum auf dem Kaffee durch den Kanal (7) übertragen wird, indem ein Spalt zwischen dem oberen Teil (8) und dem unteren Teil (6) erzeugt wird, wenn zuerst der obere Teil (8) durch nach oben Bewegung mittels eines Aktuators (A) bewegt wird, kann das Ventil (5) weiter geöffnet werden, so dass die Einfüllöffnung (4) geöffnet und der verbleibende Kaffee übertragen werden kann, wenn der untere Teil (6) weiter nach oben bewegt wird, wenn der obere Teil (8) weiter ist nach oben bewegt.

2. Eine Kaffeemaschine (1), wie in Anspruch 1 aufgeführt, ist **dadurch gekennzeichnet, dass** das Ventil (5) eine Kette (9) aufweist, dessen eines Ende lose mit dem oberen Teil (8) und deren anderes Ende lose mit dem unteren Teil (6) verbunden ist, die Kette (9), wenn sie gedehnt ist, unter der Voraussetzung, dass zwischen dem unteren Teil (6) und dem oberen Teil (8) ein Spalt verbleibt, der breit genug für den zu gießenden Schaum ist.

3. Eine Kaffeemaschine (1), wie in Anspruch 1 oder 2 aufgeführt, ist **dadurch gekennzeichnet, dass** das Ventil (5) eine Führung (10) umfasst, die auf der Oberseite des unteren Teils (6), dem oberen Teil der Führung (10) gebohrt ist und durch eine Verlängerung (11) verengt ist, die mit der Oberseite des Unterteils (6) bündig ist, wobei das Ventil (5) ferner einen Arm (12) aufweist, der an der Unterseite des Oberteils (8) angeordnet ist, der an seinem Ende eine Klaue (13) aufweist und die in die Führung (10) eintritt, wenn die Klaue (13) über die Verlängerung (11) läuft.

4. Eine Kaffeemaschine (1), wie in einem der vorherigen Ansprüchen aufgeführt, ist **dadurch gekennzeichnet, dass** das Ventil (5) einen Kolben (14) umfasst, der am oberen Teil (8) angeordnet ist und der den Kanal (7) durchläuft, während er sich abwärts bewegt und dadurch die Einfüllöffnung (4) geschlossen werden kann.

## Revendications

1. Une machine à café (1) **comportant** un corps (2), une chambre de percolation (3) qui est disposée dans le corps (2) et dans laquelle le café est mélangé à l'eau et infusé, et un orifice de versement (4) disposé à la base de la chambre de percolation (3) ; **caractérisée par** une valve (5) qui est disposée dans la chambre de percolation (3), qui est assise sur l'orifice de versement (4) et qui possède une partie inférieure (6) comportant un canal (7) aligné avec l'orifice de versement (4) et une partie supérieure (8) positionnée au-dessus de la partie inférieure (6) et reliée à la partie inférieure (6) de manière à se déplacer dans la direction verticale, la valve (5) permettant de transférer la mousse sur le café à travers le canal (7) en créant un écart entre la partie supérieure (8) et la partie inférieure (6) lorsque premièrement la partie supérieure (8) est déplacée vers le haut au moyen d'un actionneur (A), la valve (5) permettant en outre d'ouvrir l'orifice de versement (4) et de transférer le café restant lorsque la partie inférieure (6) se déplace également vers le haut lorsque la partie supérieure (8) est à nouveau déplacée vers le haut.

2. Une machine à café (1) selon la Revendication 1, **caractérisée par** la valve (5) comprenant une chaîne (9) avec une extrémité connectée de manière souple à la partie supérieure (8) et l'autre extrémité connectée de manière souple à la partie inférieure (6), la chaîne (9), lorsqu'elle est tendue, assure un écart assez large pour que la mousse à verser reste entre la partie inférieure (6) et la partie supérieure (8).

3. Une machine à café (1) selon la Revendication 1 ou 2, **caractérisée par** la valve (5) comprenant un guide (10) qui est percé sur la surface supérieure de la partie inférieure (6), la partie supérieure du guide (10) étant rétrécie au moyen d'une extension (11) qui affleure la surface supérieure de la partie inférieure (6), la valve (5) comprenant en outre un bras (12) qui est disposé sur la surface inférieure de la partie supérieure (8), qui comporte une griffe (13) à son extrémité et qui pénètre dans le guide (10) lorsque la griffe (13) passe sur l'extension (11).

4. Une machine à café (1) selon l'une quelconque des revendications précédentes, **caractérisée par** la valve (5) comprenant un piston (14) qui est disposé sur la partie supérieure (8) et qui passe à travers le canal (7) en se déplaçant vers le bas, permettant ainsi de fermer l'orifice de versement (4).
